# EUROPÄISCHE PATENTSCHRIFT

(11) **EP 4 419 771 B1**
(45) Veröffentlichungstag und Bekanntmachung des Hinweises auf die Patenterteilung: **11.03.2026**
(21) Anmeldenummer: 22793630.9
(22) Anmeldetag: 14.10.2022
(51) Int. Cl.: E05D 15/06

(54) **ANORDNUNG ZUR FÜHRUNG VON WENIGSTENS ZWEI MÖBELTÜREN**
ARRANGEMENT FOR GUIDING AT LEAST TWO FURNITURE DOORS
DISPOSITIF DE GUIDAGE D'AU MOINS DEUX PORTES DE MEUBLES

(30) Priorität: 22.10.2021 AT 5021621 U
(43) Veröffentlichungstag der Anmeldung: 28.08.2024
(73) Patentinhaber: Julius Blum GmbH, 6973 Höchst (AT)
(72) Erfinder: HANE, Andreas, 88171 Weiler im Allgäu (DE)
(74) Vertreter: Torggler & Hofmann Patentanwälte - Innsbruck
(86) Internationale Anmeldenummer: PCT/AT2022/060358
(87) Internationale Veröffentlichungsnummer: WO 2023/064968

(56) Entgegenhaltungen:
- EP-A1- 3 037 612
- EP-A1- 3 460 152
- WO-A1-2015/155591
- WO-A1-2018/204952
- WO-A1-2021/023772
- DE-U1- 202020 107 257
- FR-A1- 2 901 829
- US-A- 2 649 612

## Beschreibung

Die Erfindung betrifft eine Anordnung zur Führung von wenigstens zwei Möbeltüren, insbesondere von wenigstens zwei Falt-Schiebe-Türen, relativ zu einem feststehenden Möbelteil mit den Merkmalen des Oberbegriffs des Anspruchs 1**.**

Solche Anordnungen sind bereits aus dem Stand der Technik bekannt, beispielsweise aus der WO 2018/204952, der WO 2021/023772 A1 oder der DE 20 2020 107257. Bei solchen Lösungen gemäß dem Stand der Technik kann es aber vorkommen, dass die Möbeltüren ausknicken. Die Möbeltüren sind dadurch in der Mitte eines Möbels, wo die Möbeltüren aneinander anschließen, nicht mehr bündig zueinander. Insbesondere wenn eine Blende oder dergleichen ober- oder unterhalb der wenigstens zwei Möbeltüren vorgesehen ist, führt dies zu einem optisch unstimmigen Gesamtbild eines Möbels. Über herkömmliche Einstellmöglichkeiten von Möbeltüren - Blendenspalt, Höhe, Querverstellung - ist dieses Problem nicht behebbar. Auch eine Einstellvorrichtung, mittels welcher eine Führungsschiene quer zu ihrer Längserstreckung verstellt werden kann, wie sie etwa aus der EP 3 037 6112 A1, der EP 3 460 152 A1, der US 2 649 612 A (Dokument D7) oder der FR 2 901 829 A1 bekannt sind, löst dieses Problem nicht.

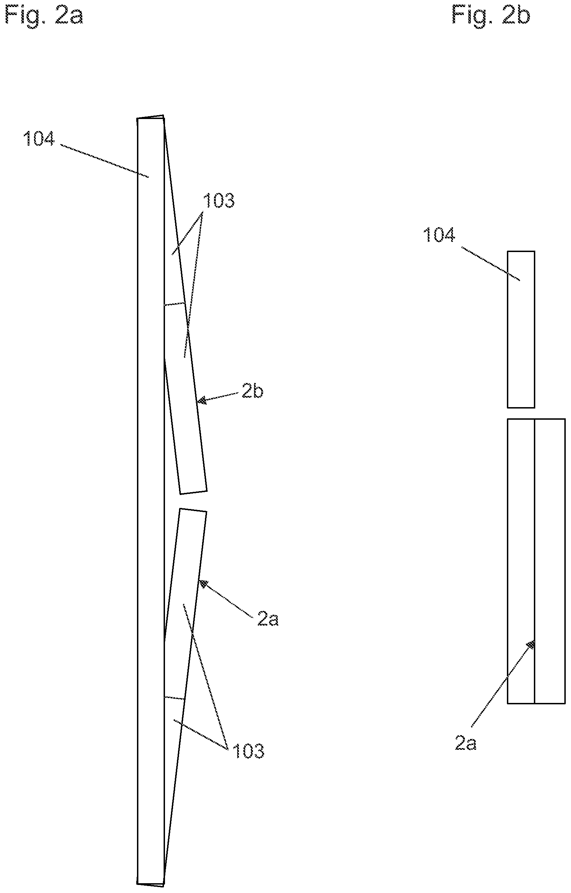

Die Figuren 2a und 2b verdeutlichen die beschriebene Fehlstellung anschaulich.

Die Aufgabe der vorliegenden Erfindung besteht darin, die beschriebenen Nachteile gemäß dem Stand der Technik zu vermeiden und eine gegenüber dem Stand der Technik verbesserte Anordnung zur Führung von wenigstens zwei Möbeltüren, insbesondere von wenigstens zwei Falt-Schiebe-Türen, relativ zu einem feststehenden Möbelteil sowie ein Möbel mit einer solchen Anordnung anzugeben.

Diese Aufgaben werden gelöst durch die Merkmale der unabhängigen Ansprüche 1 und 12.

Demgemäß ist also vorgesehen, dass wenigstens eine Einstellvorrichtung vorgesehen ist, mit welcher die wenigstens zwei Enden der wenigstens zwei Führungsschienen relativ zum feststehende Möbelteil in einer Richtung quer zu einer Längserstreckung der wenigstens zwei Führungsschienen verstellbar sind.

Es werden also lediglich die wenigstens zwei Enden der wenigstens zwei Führungsschienen, nicht jedoch die gesamten Führungsschienen, quer zu einer Längserstreckung der wenigstens zwei Führungsschienen verstellt. Die Führungsschienen können demnach in der Mitte eines Möbels quer zu einer Längserstreckung der wenigstens zwei Führungsschienen verstellt werden, wodurch die im Stand der Technik auftretende Fehlstellung ausgeglichen werden kann.

Weiters ist vorgesehen, dass die Einstellvorrichtung ein zweites Element, welches an zumindest einem, vorzugsweise an beiden, der wenigstens zwei Enden der wenigstens zwei Führungsschienen anordenbar ist, aufweist.

Das stellt eine einfache Möglichkeit dar, sowohl das feststehende Möbelteil als auch die wenigstens zwei Führungsschienen für eine Verstellung zu kontaktieren.

Zudem ist vorgesehen, dass das zweite Element zumindest teilweise durch die Verbindungsvorrichtung gebildet ist. Dadurch können Material und demnach auch Kosten reduziert werden.

Ein erfindungsgemäßes Möbel umfasst wenigstens zwei Möbeltüren, insbesondere wenigstens zwei Falt-Schiebe-Türen, sowie ein feststehendes Möbelteil und eine solche erfindungsgemäße Anordnung.

Weitere vorteilhafte Ausführungsformen der Erfindung werden in den abhängigen Ansprüchen definiert.

Es kann vorgesehen sein, dass die Einstellvorrichtung ein erstes Element, welches an einem feststehenden Möbelteil anordenbar ist, aufweist.

Es kann weiters vorgesehen sein, dass die Einstellvorrichtung zumindest ein Einstellelement aufweist.

Vorzugsweise kann vorgesehen sein, dass das Einstellelement über eine Gewindeverbindung am oder im zweiten Element gelagert ist und am ersten Element anliegt, oder am oder im ersten Element drehbar und unverschieblich gelagert ist.

Dadurch kann in einfacher Art und Weise eine Einstellvorrichtung realisiert werden. Wird das Einstellelement verdreht, so bewegt sich das zweite Element relativ zum ersten Element, da das Einstellelement am oder im zweiten Element drehbar und unverschieblich gelagert ist bzw. am ersten Element anliegt.

In Abhängigkeit einer Drehrichtung des Einstellelements kann das zweite Element in Richtung des ersten Elements zu diesem hin oder von diesem weg bewegt werden. D.h. eine Drehbewegung des Einstellelements kann in eine lineare Bewegung des zweiten Elements umgesetzt werden.

Alternativ dazu kann vorgesehen sein, dass das Einstellelement drehbar und unverschieblich am zweiten Element gelagert und über eine Gewindeverbindung am oder im ersten Element gelagert ist.

Auch bei einer solchen Ausführungsform kann das zweite Element relativ zum ersten Element durch Verdrehen des Einstellelements bewegt werden. Die beiden Ausführungsbeispiel unterscheiden sich darin, dass sich die Position des Einstellelements relativ zum zweiten Element oder relativ zum ersten Element ändert.

Es kann vorgesehen sein, dass das Einstellelement in Form einer Schraube ausgebildet ist. Dies stellt eine einfache und kostengünstige Möglichkeit zur Realisierung eines Einstellelements dar.

In einem Ausführungsbeispiel der Erfindung kann vorgesehen sein, dass die Einstellvorrichtung eine Betätigungsvorrichtung zum mittelbaren oder unmittelbaren Betätigen des Einstellelements aufweist. Eine Betätigungsvorrichtung erleichtert einem Benutzer die Betätigung des Einstellelements, insbesondere wenn das Einstellelement beispielsweise an einer schwer zugänglichen Stelle sitzt.

Es kann dabei vorgesehen sein, dass die Betätigungsvorrichtung in Form eines Schraubenkopfantriebs ausgebildet ist. Das stellt eine äußerst unkomplizierte und kostengünstige Möglichkeit zur Umsetzung einer Betätigungsvorrichtung dar.

Gemäß einem Ausführungsbeispiel der Erfindung kann vorgesehen sein, dass eine Abdeckkappe zum zumindest teilweisen Abdecken eines Spalts zwischen den wenigstens zwei Führungsschienen vorgesehen ist. Eine solche Abdeckkappe trägt zu einem ansprechenden optischen Gesamtbild der Anordnung bzw. in weiterer Folge eines Möbels mit einer solchen Anordnung bei.

Weitere Einzelheiten und Vorteile der Erfindung werden anhand der Figurenbeschreibung unter Bezugnahme auf die Zeichnungen im Folgenden näher erläutert. Darin zeigen:
- Fig. 1: eine perspektivische Ansicht eines Möbels mit einem Ausführungsbeispiel einer Anordnung,
- Fig. 2a: eine schematische Draufsicht auf Möbeltüren und eine Blende gemäß dem Stand der Technik,
- Fig. 2b: eine schematische Seitenansicht auf Möbeltüren und eine Blende gemäß dem Stand der Technik,
- Fig. 3a: eine perspektivische Ansicht eines Ausführungsbeispiels einer Anordnung mit Teilen eines Möbels,
- Fig. 3b: das Detail A der Figur 3a,
- Fig. 3c: eine perspektivische Rückansicht auf ein Ausführungsbeispiel einer Anordnung,
- Fig. 3d: eine perspektivische Frontansicht auf ein Ausführungsbeispiel einer Anordnung,
- Fig. 4: eine Explosionsdarstellung einer Einstellvorrichtung sowie eine Abdeckkappe,
- Fig. 5a: eine Draufsicht auf ein Ausführungsbeispiel einer Anordnung vor einem Einstellvorgang, und
- Fig. 5b: eine Draufsicht auf ein Ausführungsbeispiel einer Anordnung nach einem Einstellvorgang.

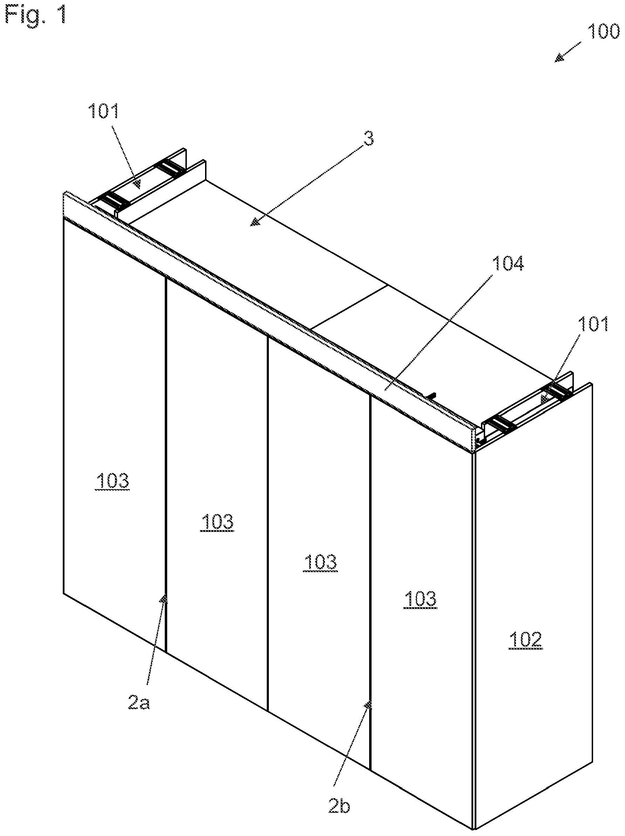

Die Figur 1 zeigt eine perspektivische Ansicht eines Möbels 100 mit einer Anordnung 1. Es ist erkennbar, dass das Möbel 100 ein feststehendes Möbelteil 3 in Form eines Möbelkorpus aufweist.

An den Seiten des feststehenden Möbelteils 3 sind Hohlräume 101 ersichtlich, in welche Möbeltüren 2a, 2b in Form von Falt-Schiebe-Türen in einem geöffneten Zustand des Möbels 100 verstaut werden können. Die Hohlräume 101 werden durch das feststehende Möbelteil 3 und Seitenwände 102 gebildet.

Die Möbeltüren 2a, 2b sind als Falt-Schiebe-Türen ausgebildet und weisen demnach jeweils zwei Türblätter 103 auf, welche über Scharniere miteinander verbunden sind.

Oberhalb der Möbeltüren 2a, 2b ist eine Blende 104 angeordnet. Mittels der Blende 104 kann beispielsweise ein Abstand einer Oberkante des Möbels 100 zu einer Decke überbrückt werden.

Die Figur 2a zeigt eine schematische Draufsicht auf Möbeltüren 2a, 2b und eine Blende 104 gemäß dem Stand der Technik, die Figur 2b eine entsprechende Seitenansicht dazu. Es ist erkennbar, dass die Möbeltüren 2a, 2b in der Mitte der Blende 104, also im Wesentlichen in der Mitte des Möbels 100, nicht bündig zueinander und zur Blende 104 sind.

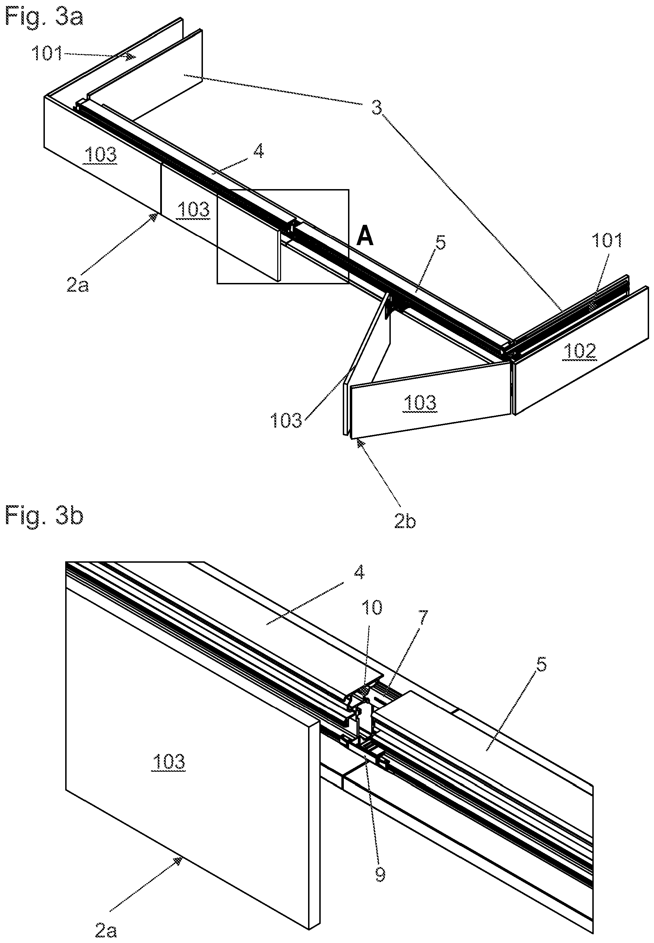

Die Figur 3a zeigt eine perspektivische Ansicht einer Anordnung 1 mit Teilen eines Möbels 100, die Figur 3b das Detail A der Figur 3a. Es sind das feststehende Möbelteil 3, die Möbeltüren 2a, 2b sowie die Seitenwände 102 des Möbels 100 angedeutet.

Es ist erkennbar, dass die beiden Möbeltüren 2a, 2b über Laufwägen 6a, 6b verfahrbar an den Führungsschienen 4, 5 gelagert sind. Beim Öffnen einer Möbeltüre 2a, 2b verfährt der entsprechende Laufwagen 6a, 6b entlang der entsprechenden Führungsschiene 4, 5. Demnach wird eine Möbeltüre 2a, 2b über den entsprechenden Laufwagen 6a, 6b und die entsprechende Führungsschiene 4, 5 am feststehenden Möbelteil 3 geführt.

Die beiden Führungsschienen 4, 5 sind über eine Verbindungsvorrichtung 7 an jeweils einem Ende 4a, 5a miteinander verbunden. Zudem ist eine Abdeckkappe 9 ersichtlich, welche einen Spalt 10 zwischen den Führungsschienen 4, 5 zumindest teilweise abdeckt. Selbstverständlich kann auch eine Abdeckkappe 9 vorgesehen sein, welche den Spalt 10 vollständig abdeckt.

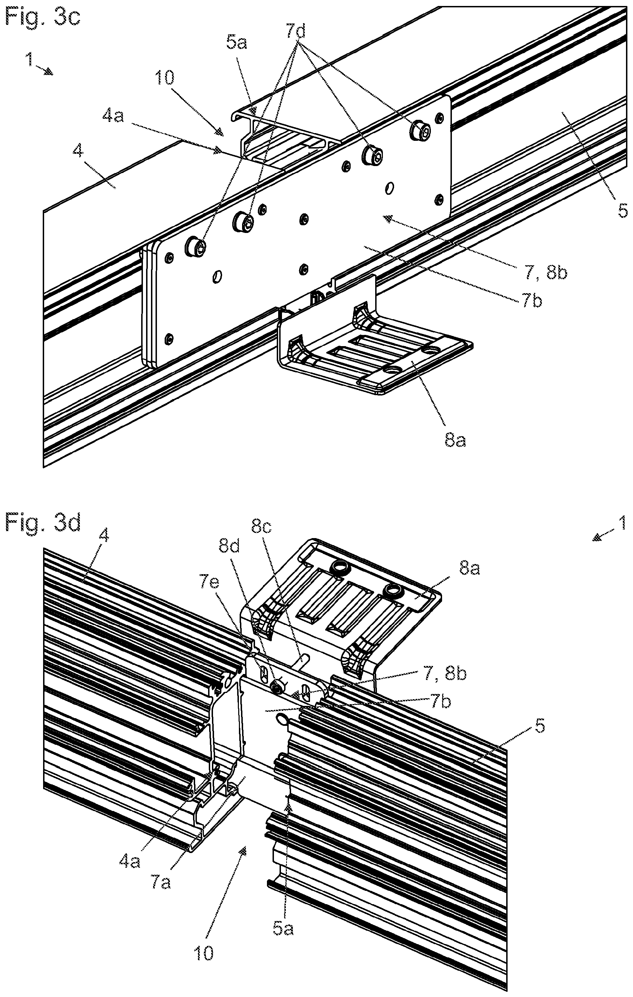

Die Figur 3c zeigt eine perspektivische Rückansicht auf eine Anordnung 1, die Figur 3d eine entsprechende perspektivische Frontansicht, wobei die Anordnung 1 in der Figur 3d auf dem Kopf steht.

Es ist erkennbar, dass die Verbindungsvorrichtung 7 ein erstes Klemmelement 7a und ein zweites Klemmelement 7b aufweist. Das erste Klemmelement 7a kann dabei mit Laschen 7c in die Führungsschienen 4, 5 eingeführt werden. Über Mittel 7d, im vorliegenden Ausführungsbeispiel Schrauben, können die Führungsschienen 4, 5 zwischen erstem Klemmelement 7a und zweitem Klemmelement 7b geklemmt und somit miteinander lösbar verbunden werden.

Im vorliegenden Ausführungsbeispiel bildet die Verbindungsvorrichtung 7 das zweite Element 8b der Einstellvorrichtung 8. Das Einstellelement 8c ist über eine Gewindeverbindung im zweiten Element 8b gelagert und liegt am ersten Element 8a an. Das erste Element 8a fungiert im vorliegenden Ausführungsbeispiel also als Anschlag.

Es können aber auch andere Anordnungen des Einstellelements 8c, wie bereits beschrieben, vorgesehen sein.

Das Einstellelement 8c ist im vorliegenden Ausführungsbeispiel als Schraube ausgebildet, wobei der Schraubenkopfantrieb der Schraube eine Betätigungsvorrichtung 8d bildet.

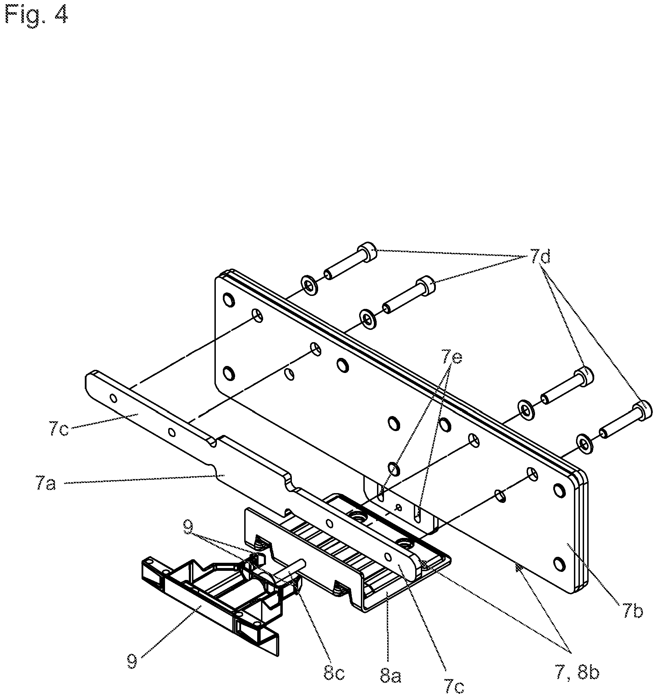

Die Figur 4 zeigt eine Explosionsdarstellung einer Einstellvorrichtung 8 sowie eine Abdeckkappe 9. Es sind das erste Element 8a und das zweite Element 8b, welches durch die Verbindungsvorrichtung 7 gebildet wird, erkennbar.

Die Abdeckkappe 9 kann über Rastelemente 9a am zweiten Element 8b angeordnet werden. Dazu sind am zweiten Element 8b Ausnehmungen 7e vorgesehen. Die Abdeckkappe 9 kann weiters so geformt sein, dass ein Einstellelement 8c ungehindert zugänglich ist.

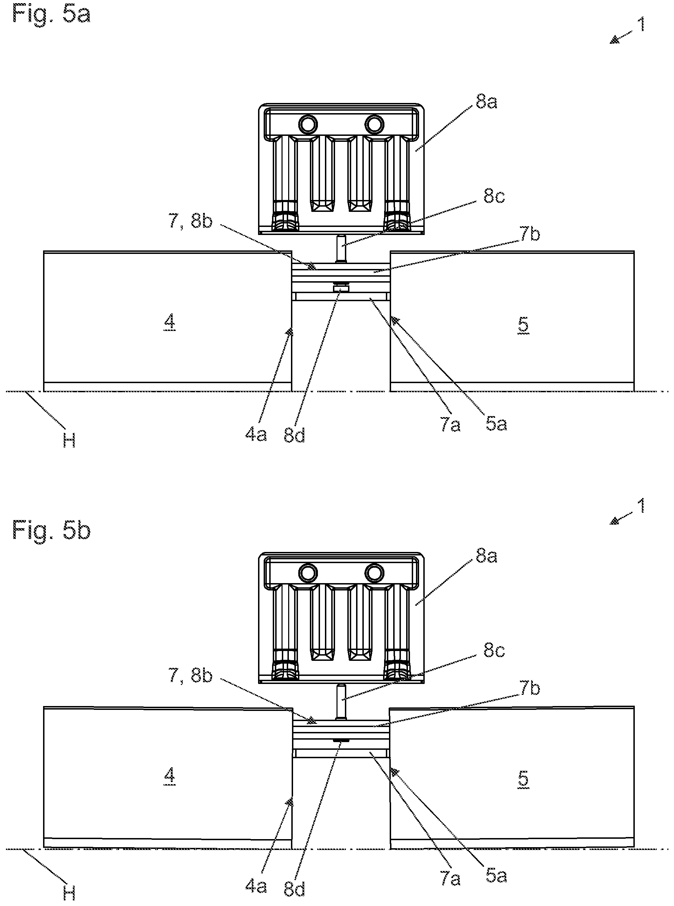

Die Figur 5a zeigt eine Draufsicht auf ein Ausführungsbeispiel einer Anordnung 1 vor einem Einstellvorgang. Es ist erkennbar, dass die Führungsschienen 4, 5 parallel zu einer horizontalen Hilfslinie H sind. Ein Schraubenkopf des Einstellelements 8c steht etwas über das zweite Element 8b hervor.

Die Figur 5b zeigt eine Draufsicht auf ein Ausführungsbeispiel einer Anordnung 1 nach einem Einstellvorgang. Der Einstellvorgang wurde durch Verdrehen des Einstellelements 8c durchgeführt.

Es ist ersichtlich, dass das Einstellelement 8c nun nicht mehr über das zweite Element 8b überaussteht. Die Führungsschienen 4, 5 sind nicht mehr parallel zu einer horizontalen Hilfslinie H.

Durch das Verdrehen des Einstellelements wurde das zweite Element 8b, und demzufolge die Enden 4a, 5a der zwei Führungsschienen 4, 5, relativ zum ersten Element 8a bewegt, im vorliegenden Beispiel von diesem wegbewegt.

Somit wurde ein Ausknicken der Möbeltüren 2a, 2b in diesem Bereich ausgeglichen.

### Bezugszeichenliste:

- 1.: Anordnung
- 2a: erste Möbeltüre
- 2b: andere Möbeltüre
- 3.: feststehendes Möbelteil
- 4.: erste Führungsschiene
4a Ende
- 5.: andere Führungsschiene
5 Ende
- 6a: erster Laufwagen
- 6b: zweiter Laufwagen
- 7.: Verbindungsvorrichtung
7a erstes Klemmelement
7b zweites Klemmelement
7c Laschen
7d Mittel
7e Ausnehmungen
- 8.: Einstellvorrichtung
8a erstes Element
8b zweites Element
8c Einstellelement
8d Betätigungsvorrichtung
- 9.: Abdeckkappe
9a Rastelement
- 10.: Spalt
- 100.: Möbel
- 101.: Hohlraum
- 102.: Seitenwand
- 103.: Türblatt
- 104.: Blende
- H: Hilfslinie

## Patentansprüche

1. Anordnung (1) zur Führung von wenigstens zwei Möbeltüren (2a, 2b), insbesondere von wenigstens zwei Falt-Schiebe-Türen, relativ zu einem feststehenden Möbelteil (3), mit:
- wenigstens zwei Führungsschienen (4, 5), welche am Möbelteil (3) anordenbar sind,
- wenigstens einem ersten, an einer ersten der wenigstens zwei Führungsschienen (4, 5) verfahrbar gelagerten oder lagerbaren, Laufwagen (6a), welcher mit einer ersten der wenigstens zwei Möbeltüren (2a) verbindbar ist, und
- wenigstens einem zweiten, an der anderen der wenigstens zwei Führungsschienen (4, 5) verfahrbar gelagerten oder lagerbaren, Laufwagen (6b), welcher mit einer anderen der wenigstens zwei Möbeltüren (2b) verbindbar ist, und
- wenigstens einer Verbindungsvorrichtung (7) mittels welcher die wenigstens zwei Führungsschienen (4, 5) an jeweils einem Ende (4a, 5a) lösbar verbindbar sind, wobei die Führungsschienen (4, 5) in einem verbundenen Zustand im Wesentlichen fluchtend zueinander angeordnet sind,
**dadurch gekennzeichnet, dass** wenigstens eine Einstellvorrichtung (8) vorgesehen ist, mit welcher die wenigstens zwei Enden (4a, 5a) der wenigstens zwei Führungsschienen (4, 5) relativ zum feststehende Möbelteil (3) in einer Richtung quer zu einer Längserstreckung der wenigstens zwei Führungsschienen (4, 5) verstellbar sind, dass
die Einstellvorrichtung (8) ein zweites Element (8b), welches an zumindest einem, vorzugsweise an beiden, der wenigstens zwei Enden (4a, 5a) der wenigstens zwei Führungsschienen (4, 5) anordenbar ist, aufweist und dass das zweite Element (8b) zumindest teilweise durch die Verbindungsvorrichtung (7) gebildet ist.

2. Anordnung nach Anspruch 1, **dadurch gekennzeichnet, dass** die Einstellvorrichtung (8) ein erstes Element (8a), welches an einem feststehenden Möbelteil anordenbar ist, aufweist.

3. Anordnung nach einem der Ansprüche 1 oder 2, **dadurch gekennzeichnet, dass** die Einstellvorrichtung (8) zumindest ein Einstellelement (8c) aufweist.

4. Anordnung nach den Ansprüchen 2 und 3, **dadurch gekennzeichnet, dass** das Einstellelement (8c) über eine Gewindeverbindung am oder im zweiten Element (8b) gelagert ist und am ersten Element (8a) anliegt, oder am oder im ersten Element (8a) drehbar und unverschieblich gelagert ist.

5. Anordnung nach den Ansprüchen 2 und 3, **dadurch gekennzeichnet, dass** das Einstellelement (8c) drehbar und unverschieblich am zweiten Element (8b) gelagert und über eine Gewindeverbindung am oder im ersten Element (8a) gelagert ist.

6. Anordnung nach den Ansprüchen 4 oder 5, **dadurch gekennzeichnet, dass** die Gewindeverbindung als Bewegungsgewinde ausgebildet ist.

7. Anordnung nach einem der Ansprüche 3 bis 6, **dadurch gekennzeichnet, dass** das Einstellelement (8c) in Form einer Schraube ausgebildet ist.

8. Anordnung nach einem der Ansprüche 3 bis 7, **dadurch gekennzeichnet, dass** die Einstellvorrichtung (8) eine Betätigungsvorrichtung (8d) zum mittelbaren oder unmittelbaren Betätigen des Einstellelements (8c) aufweist.

9. Anordnung nach Anspruch 8, **dadurch gekennzeichnet, dass** die Betätigungsvorrichtung (8d) in Form eines Schraubenkopfantriebs ausgebildet ist.

10. Anordnung nach einem der Ansprüche 1 bis 9, **dadurch gekennzeichnet, dass** eine Abdeckkappe (9) zum zumindest teilweisen Abdecken eines Spalts (10) zwischen den wenigstens zwei Führungsschienen (4, 5) vorgesehen ist.

11. Anordnung nach Anspruch 10, **dadurch gekennzeichnet, dass** die Abdeckkappe (9) an dem zweiten Element angeordnet oder anordenbar ist.

12. Möbel (100) umfassend wenigstens zwei Möbeltüren (4a, 2b) insbesondere wenigstens zwei Falt-Schiebe-Türen, sowie ein feststehendes Möbelteil (3) mit einer Anordnung nach einem der Ansprüche 1 bis 11.

## Claims

1. Arrangement (1) for guiding at least two furniture doors (2a, 2b), in particular at least two folding sliding doors, relative to a stationary furniture part (3), with:
- at least two guide rails (4, 5), which are arrangeable on the furniture part (3),
- at least one first carriage (6a), mounted or mountable movably on a first of the at least two guide rails (4, 5), which is connectable to a first of the at least two furniture doors (2a), and
- at least one second carriage (6b), mounted or mountable movably on the other of the at least two guide rails (4, 5), which is connectable to another of the at least two furniture doors (2b), and
- at least one connection device (7) by means of which the at least two guide rails (4, 5) are connectable detachably at in each case one end (4a, 5a), wherein the guide rails (4, 5) are arranged substantially aligned with each other in a connected state,
**characterized in that**
at least one adjusting device (8) is provided, with which the at least two ends (4a, 5a) of the at least two guide rails (4, 5) are adjustable relative to the stationary furniture part (3) in a direction transverse to a longitudinal extent of the at least two guide rails (4, 5), that the adjusting device (8) has a second element (8b), which is arrangeable on at least one, preferably on both, of the at least two ends (4a, 5a) of the at least two guide rails (4, 5) and that the second element (8b) is at least partially formed by the connection device (7).

2. Arrangement according to claim 1, **characterized in that** the adjusting device (8) has a first element (8a), which is arrangeable on a stationary furniture part.

3. Arrangement according to one of claims 1 or 2, **characterized in that** the adjusting device (8) has at least one adjusting element (8c).

4. Arrangement according to claims 2 and 3, **characterized in that** the adjusting element (8c) is mounted on or in the second element (8b) via a threaded connection and rests against the first element (8a), or is mounted rotatably and non-displaceably on or in the first element (8a).

5. Arrangement according to claims 2 and 3, **characterized in that** the adjusting element (8c) is mounted rotatably and non-displaceably on the second element (8b) and is mounted on or in the first element (8a) via a threaded connection.

6. Arrangement according to claims 4 or 5, **characterized in that** the threaded connection is formed as a movement thread.

7. Arrangement according to one of claims 3 to 6, **characterized in that** the adjusting element (8c) is formed as a screw.

8. Arrangement according to one of claims 3 to 7, **characterized in that** the adjusting device (8) has an actuating device (8d) for indirectly or directly actuating the adjusting element (8c).

9. Arrangement according to claim 8, **characterized in that** the actuating device (8d) is formed as a screwhead drive.

10. Arrangement according to one of claims 1 to 9, **characterized in that** a covering cap (9) is provided for at least partially covering a gap (10) between the at least two guide rails (4, 5).

11. Arrangement according to claim 10, **characterized in that** the covering cap (9) is arranged or arrangeable on the second element.

12. Piece of furniture (100) comprising at least two furniture doors (4a, 2b), in particular at least two folding sliding doors, as well as a stationary furniture part (3) with an arrangement according to one of claims 1 to 11.

## Revendications

1. Ensemble (1) de guidage d'au moins deux portes de meuble (2a, 2b), en particulier d'au moins deux portes pliantes-coulissantes, par rapport à une partie de meuble fixe (3), avec :
- au moins deux rails de guidage (4, 5), qui peuvent être disposés sur la partie de meuble (3),
- au moins un premier chariot (6a) monté ou pouvant être monté de manière mobile sur un premier des au moins deux rails de guidage (4, 5), lequel peut être relié à une première des au moins deux portes de meubles (2a), et
- au moins un deuxième chariot (6b) monté ou pouvant être monté de manière mobile sur l'autre des au moins deux rails de guidage (4, 5), lequel peut être relié à une autre des au moins deux portes de meuble (2b), et
- au moins un dispositif de liaison (7) au moyen duquel les au moins deux rails de guidage (4, 5) peuvent être reliés de manière amovible sur respectivement une extrémité (4a, 5a),
dans lequel les rails de guidage (4, 5) sont disposés de manière sensiblement alignée les uns par rapport aux autres dans un état relié,
**caractérisé en ce qu'**au moins un dispositif de réglage (8) est prévu avec lequel les au moins deux extrémités (4a, 5a) des au moins deux rails de guidage (4, 5) sont ajustables par rapport à la partie de meuble fixe (3) dans une direction transversale à une extension longitudinale des au moins deux rails de guidage (4, 5), que le dispositif de réglage (8) présente un deuxième élément (8b), qui peut être disposé sur au moins une, de préférence sur les deux, des au moins deux extrémités (4a, 5a) des au moins deux rails de guidage (4, 5) et que le deuxième élément (8b) est formé au moins en partie par le dispositif de liaison (7).

2. Ensemble selon la revendication 1, **caractérisé en ce que** le dispositif de réglage (8) présente un premier élément (8a), qui peut être disposé sur une partie de meuble fixe.

3. Ensemble selon l'une quelconque des revendications 1 ou 2, **caractérisé en ce que** le dispositif de réglage (8) présente au moins un élément de réglage (8c).

4. Ensemble selon les revendications 2 et 3, **caractérisé en ce que** l'élément de réglage (8c) est monté par l'intermédiaire d'une liaison filetée sur ou dans le deuxième élément (8b) et repose sur le premier élément (8a), ou est monté de manière rotative et sans pouvoir coulisser sur ou dans le premier élément (8a).

5. Ensemble selon les revendications 2 et 3, **caractérisé en ce que** l'élément de réglage (8c) est monté de manière rotative et sans pouvoir coulisser sur le deuxième élément (8b) et est monté sur ou dans le premier élément (8a) par l'intermédiaire d'une liaison filetée.

6. Ensemble selon les revendications 4 ou 5, **caractérisé en ce que** la liaison filetée est réalisée sous forme d'un filetage de mouvement.

7. Ensemble selon l'une quelconque des revendications 3 à 6, **caractérisé en ce que** l'élément de réglage (8c) est réalisé sous la forme d'une vis.

8. Ensemble selon l'une quelconque des revendications 3 à 7, **caractérisé en ce que** le dispositif de réglage (8) présente un dispositif d'actionnement (8d) pour l'actionnement indirect ou direct de l'élément de réglage (8c).

9. Ensemble selon la revendication 8, **caractérisé en ce que** le dispositif d'actionnement (8d) est réalisé sous la forme d'un entraînement de tête de vis.

10. Ensemble selon l'une quelconque des revendications 1 à 9, **caractérisé en ce qu'**un capuchon de recouvrement (9) est prévu pour recouvrir au moins en partie un interstice (10) entre les au moins deux rails de guidage (4, 5).

11. Ensemble selon la revendication 10, **caractérisée en ce que** le capuchon de recouvrement (9) est disposé ou peut être disposé sur le deuxième élément.

12. Meuble (100) comprenant au moins deux portes de meuble (4a, 2b), en particulier au moins deux portes pliantes-coulissantes, ainsi qu'une partie de meuble fixe (3) avec un ensemble selon l'une quelconque des revendications 1 à 11.
